# FASCICULE DE BREVET EUROPEEN

(11) **EP 3 672 824 B1**
(45) Date de publication et mention de la délivrance du brevet: **27.04.2022**
(21) Numéro de dépôt: 18752821.1
(22) Date de dépôt: 17.07.2018
(51) Int. Cl.: B60K 37/06, B60K 35/00

(54) **SYSTÈME ET PROCÉDÉ DE COMMANDE D'UN MONITEUR PRINCIPAL DE VÉHICULE AUTONOME**
SYSTEM UND VERFAHREN ZUR STEUERUNG EINES HAUPTMONITORS EINES AUTONOMEN FAHRZEUGS
SYSTEM AND METHOD FOR CONTROLLING A MAIN MONITOR OF AN AUTONOMOUS VEHICLE

(30) Priorité: 24.08.2017 FR 1757848
(43) Date de publication de la demande: 01.07.2020
(73) Titulaire: PSA Automobiles SA, 78300 Poissy (FR)
(72) Inventeur: LAINE, Vincent, 78340 Les Clayes Sous Bois (FR); TACCORI DUVERGEY, Céline, 92120 Montrouge (FR); RAMPILLON, Felicie, 75014 Paris 14 (FR); FERON, Stephane, 92350 Le Plessis Robinson (FR)
(86) Numéro de dépôt international: PCT/FR2018/051825
(87) Numéro de publication internationale: WO 2019/038487

(56) Documents cités:
- DE-A1-102013 012 777
- DE-A1-102013 013 696
- DE-A1-102014 118 957
- DE-A1-102015 106 487

## Description

L'invention concerne, de façon générale, le domaine de l'affichage dans un véhicule automobile et vise plus particulièrement un système de commande d'un écran d'affichage installé dans un véhicule automobile autonome.

De nos jours, les véhicules automobiles sont généralement équipés d'un écran d'affichage positionné au niveau du tableau de bord du véhicule et permettant l'affichage de diverses fonctionnalités du véhicule, telles qu'un système de navigation, un état de la consommation du véhicule ou bien encore des fonctions multimédia par exemple.

En pratique, un tel écran d'affichage est contrôlé manuellement par le conducteur, généralement au moyen d'une série de boutons de commande intégrés au tableau de bord ou par l'intermédiaire de commandes au volant. De tels écrans intègrent également de nos jours de plus en plus une fonction tactile, permettant à la fois de libérer de l'espace sur le tableau de bord et d'assurer au conducteur ou aux passagers un accès simplifié aux différentes fonctions.

Par ailleurs, les développements relatifs à la mise en œuvre de modes de conduite autonome dans les véhicules sont nombreux. Aujourd'hui, un véhicule autonome comprend généralement, de manière connue, un mode de conduite piloté et un mode de conduite autonome, permettant au conducteur de ne pas focaliser son attention sur la conduite. Le conducteur peut ainsi aisément choisir le mode de conduite en fonction des circonstances et de l'environnement du véhicule.

Lorsque le mode de conduite autonome d'un véhicule est actif, de nombreuses caractéristiques permettent d'augmenter le confort du conducteur et des passagers. Il est connu notamment des systèmes permettant de rétracter le volant dans le tableau de bord ou bien encore permettant au conducteur de reculer son siège, de manière à s'écarter du tableau de bord. Cependant, dans de telles configurations, l'écran d'affichage tactile ou disposant de boutons de commande proches de l'écran ou du volant est difficilement accessible par le conducteur du véhicule.

En outre, il est connu d'intégrer un pavé tactile, communément désigné « Touchpad », à la console centrale du véhicule, c'est-à-dire à la partie centrale de l'habitacle du véhicule entre le siège du conducteur et le siège du passager, sur laquelle se trouve généralement un levier de vitesse. Un tel pavé tactile, accessible par l'utilisateur quelle que soit la position de son siège et configuré pour être compatible avec un mode de conduite piloté, permet grâce à des gestes simples de glissement d'un doigt, de commander l'écran d'affichage. De manière connue, l'écran d'affichage est alors configuré pour afficher les boutons d'accès à un ensemble de fonctions au moyen d'icônes, entourées par exemple d'un halo lumineux lorsque celles-ci sont sélectionnées. Des mouvements répétés de translation du doigt sur le pavé tactile permettent notamment le passage d'une icône à une autre. Un tel pavé tactile est différent d'un écran d'affichage tactile sur lequel les mouvements de glissement du doigt permettent un accès direct d'une page à une autre.

Cependant un tel pavé tactile, généralement installé sur des véhicules haut de gamme, présente des capacités limitées, puisque qu'il est configuré pour être principalement compatible avec le mode de conduite piloté du véhicule et ainsi pour n'autoriser que des mouvements simples de translation vers la gauche, la droite, le haut et le bas. De plus, de tels mouvements limités imposent une progression entre les différentes icônes pas à pas, ce qui présente l'inconvénient d'être chronophage. Un tel pavé tactile n'est ainsi pas optimal en cas de conduite autonome du véhicule, n'offrant pas à l'utilisateur un accès rapide et simple à une fonctionnalité souhaitée. De plus, les fonctionnalités accessibles sur l'écran d'affichage via un tel pavé tactile sont également limitées. On connait, par le document DE102013012777, un procédé de conduite d'un véhicule automobile, qui est commuté entre un mode de conduite manuel, dans lequel le véhicule à moteur est guidé par un conducteur, et un mode de conduite automatique, dans lequel un guidage longitudinal et transversal sont exécutés automatiquement au moyen d'un dispositif de commande. On connait aussi par le document DE102013013696, un système d'infodivertissement pour véhicule automobile, avec un premier dispositif d'affichage tactile, un deuxième dispositif d'affichage tactile et un dispositif de commande.

L'invention vise donc à pallier au moins en partie ces inconvénients en proposant un système de commande d'un écran d'affichage de véhicule simple et efficace, apportant à un utilisateur une accessibilité rapide à différentes fonctionnalités. L'invention vise en particulier un système de commande complet accessible qu'elle que soit la position du siège dans le véhicule.

Plus précisément, pour parvenir à ce résultat, la présente invention concerne un système de commande pour la commande d'un moniteur principal de véhicule, notamment de véhicule automobile, ledit véhicule comprenant une console centrale et présentant un mode de conduite piloté et un mode de conduite autonome, ledit système de commande, configuré pour être monté sur ladite console centrale, comprenant :
- un écran d'affichage, présentant un état actif et un état inactif,
- une dalle tactile, présentant une configuration de base, dans laquelle ladite dalle tactile ne permet qu'un nombre limité de mouvements simples, et une configuration avancée, dans laquelle la dalle tactile est configurée pour permettre le contrôle du déplacement d'un pointeur sur le moniteur principal.

Ledit système de commande, présentant un premier mode de fonctionnement, dans lequel ledit écran d'affichage est dans ledit état inactif et la dalle tactile est dans sa configuration de base, et un deuxième mode de fonctionnement, dans lequel ledit écran d'affichage est dans ledit état actif et la dalle tactile est dans sa configuration avancée, le système de commande comprend en outre un module de commande configuré pour placer le système de commande dans ledit premier mode de fonctionnement lorsque le véhicule se trouve dans le mode de conduite piloté ou dans ledit deuxième mode de fonctionnement lorsque le véhicule se trouve dans le mode de conduite autonome.

Un tel système de commande permet avantageusement au conducteur de disposer de deux modes de fonctionnement distincts selon le mode de conduite du véhicule. Aussi, le système de commande permet une commande du moniteur principal simplifié lorsque l'attention du conducteur est requise sur la route et une commande plus complète dans le cas contraire.

De manière avantageuse, le moniteur principal présentant un mode d'affichage simplifié et un mode d'affichage complet, ledit module de commande est en outre configuré pour placer le moniteur principal dans ledit mode d'affichage simplifié lorsque le véhicule est en mode de conduite piloté ou dans ledit mode d'affichage complet lorsque le véhicule est en mode de conduite autonome. Deux tels modes d'affichage, permettent au moniteur principal de s'adapter au mode de conduite du véhicule.

Avantageusement, les mouvements simples de la configuration de base correspondent à un mouvement de glissement vers la gauche, un mouvement de glissement vers la droite, un mouvement de glissement vers le bas ou un mouvement de glissement vers le haut.

De manière préférée, la dalle tactile présente également une configuration intermédiaire dans laquelle ladite dalle tactile permet un nombre limité de mouvements simples combinés à une fonction de reconnaissance d'écriture, permettant la saisie d'un texte plus rapide, même lorsque le véhicule est dans son mode de conduite piloté.

De manière avantageuse, l'état actif de l'écran d'affichage correspond audit écran d'affichage allumé et l'état inactif de l'écran d'affichage correspond audit écran d'affichage éteint ou présentant un fond d'écran monochrome, permettant de ne pas distraire le conducteur lorsque le véhicule est dans son mode de conduite piloté.

Avantageusement, l'écran d'affichage est configuré pour afficher un clavier virtuel tactile, permettant une saisie plus simple et plus rapide lorsque le véhicule est en mode conduite autonome.

De manière avantageuse, le véhicule comprenant un moniteur secondaire, ledit système de commande est en outre configuré pour commander ledit moniteur secondaire, permettant avec un unique système de commande d'accéder aux deux moniteurs du véhicule.

Selon un aspect préféré de l'invention, le système de commande est configuré pour commander un moniteur principal de véhicule comprenant un écran tactile et/ou un écran non tactile.

Avantageusement, l'écran d'affichage et la dalle tactile présentent une taille comprise entre 5 et 6 pouces de diagonale de format 16/10 ou 16/9 et sont configurés pour être intégrés à la console centrale longitudinalement (autrement dit au format portrait) ou transversalement (autrement dit au format paysage).

De manière avantageuse, le mode d'affichage complet du moniteur principal présente un affichage similaire à un environnement d'ordinateur personnel, lorsque le véhicule est en mode de conduite autonome.

Avantageusement, le mode d'affichage simplifié du moniteur principal présente un ensemble d'icônes.

De manière préférée, ledit module de commande étant configuré pour activer l'écran d'affichage au démarrage du véhicule par un conducteur, l'écran d'affichage est configuré pour afficher un message d'identification dudit conducteur du véhicule à l'activation de l'écran d'affichage.

L'invention concerne également un procédé de commande d'un moniteur principal de véhicule par un système de commande comprenant un écran d'affichage, une dalle tactile et un module de commande, ledit procédé comprenant :
- une étape de détection par ledit module de commande, d'un mode de conduite piloté ou d'un mode de conduite autonome du véhicule, et
- une étape d'activation, par le module de commande, d'un premier mode de fonctionnement dudit système de commande, dans lequel ledit écran d'affichage est dans un état inactif et ladite dalle tactile est dans une configuration de base,
dans laquelle ladite dalle tactile ne permet qu'un nombre limité de mouvements simples, lorsque
le véhicule se trouve dans ledit mode de conduite piloté ou d'activation d'un deuxième mode de fonctionnement, dans lequel l'écran d'affichage est dans un état actif et la dalle tactile est dans une configuration avancée, dans laquelle la dalle tactile est configurée pour permettre le contrôle du déplacement d'un pointeur sur le moniteur principal, lorsque le véhicule se
trouve dans ledit mode de conduite autonome.

L'invention concerne enfin un véhicule automobile comprenant un moniteur principal et un système de commande d'un tel moniteur principal tel que décrit précédemment.

D'autres caractéristiques et avantages de l'invention apparaîtront à la lecture de la description détaillée des formes de réalisation de l'invention, données à titre d'exemple uniquement, et en référence aux dessins qui montrent :
- la figure 1, une représentation schématique d'un véhicule automobile et du repère de définition d'un tel véhicule,
- la figure 2, une représentation schématique d'un système de commande selon une forme de réalisation de l'invention,
- les figures 3A et 3B, une représentation schématique de deux exemples de positionnement d'un système de commande sur une console centrale du véhicule de la figure 1,
- la figure 4, une représentation schématique des différentes pièces du système de commande de la figure 2, et
- la figure 5, un schéma bloc d'un procédé de commande selon un mode de réalisation de l'invention.

Dans ce qui va suivre, les formes de réalisation décrites s'attachent plus particulièrement à une installation du système de commande selon l'invention au sein d'un véhicule automobile. Cependant, toute installation dans un contexte différent, en particulier dans tout type de véhicule, est également visée par la présente invention.

Selon une forme de réalisation préférée de l'invention, un véhicule 1 automobile comprend un mode de conduite piloté P et un mode de conduite autonome Q, permettant au conducteur du véhicule 1 de discuter avec d'autres passagers ou d'accéder aisément à différentes fonctionnalités, en vue par exemple de consulter un courriel ou de rédiger un document. Un tel mode de conduite autonome Q permet également au conducteur, comme cela est connu, de déplacer son siège par exemple en le reculant ou en l'orientant dans une direction différente de l'axe de la route.

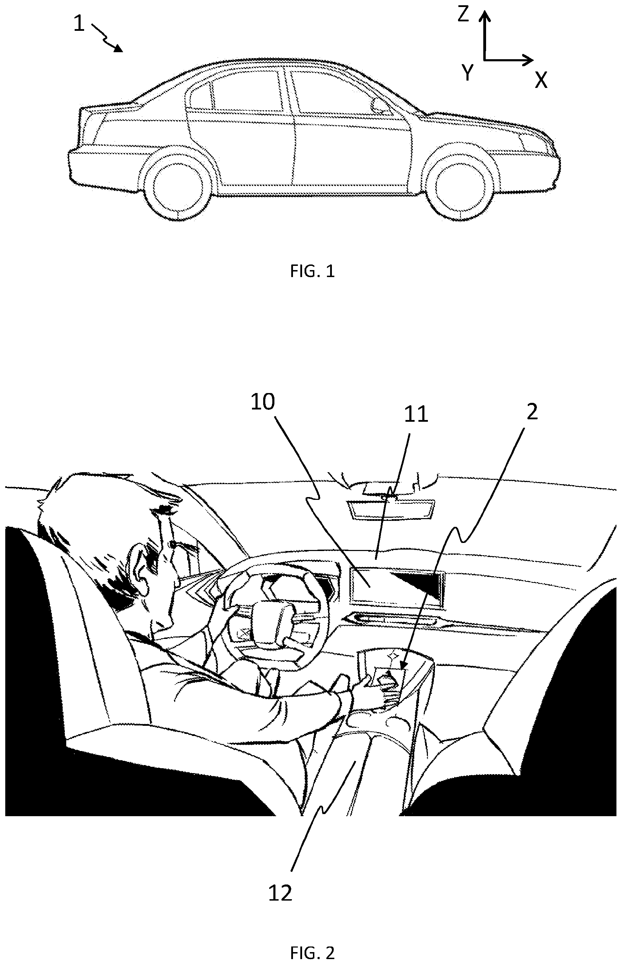

En référence à la figure 1, le véhicule 1 s'étend longitudinalement selon un axe X, verticalement selon un axe Z et transversalement selon un axe Y, de manière à former un repère orthogonal (X, Y, Z). Ainsi par le terme horizontal, on entend un objet s'étendant dans le plan (X, Y). De manière similaire, le terme vertical désigne un objet s'étendant dans le plan (Y, Z).

Un tel véhicule 1 automobile comprend, en référence à la figure 2, un tableau de bord 11 et une console centrale 12, s'étendant entre le siège du conducteur et le siège du passager avant. Dans le repère orthogonal (X, Y, Z), la console centrale 12 s'étend sensiblement longitudinalement selon l'axe X et transversalement selon l'axe Y dans le plan horizontal (X, Y). Le véhicule 1 comprend en outre un moniteur principal 10 et un système de commande 2 d'un tel moniteur principal 10.

Selon une forme de réalisation préférée de l'invention, le moniteur principal 10, positionné sur le tableau de bord 11 du véhicule 1, est configuré pour afficher l'ensemble des fonctionnalités du véhicule 1, telle qu'un système de navigation, les commandes de la climatisation ou bien encore un système multimédia par exemple.

Un tel moniteur principal 10 est en outre configuré pour proposer deux modes d'affichage distincts : un mode d'affichage simplifié Ao, dans lequel les différentes fonctionnalités sont affichées sous forme d'icônes simples et un mode d'affichage complet A₁, semblable à l'affichage d'un ordinateur personnel, par exemple sous un environnement informatique Windows^{®}. De tels modes d'affichage seront décrits plus en détails par la suite.

Le moniteur principal 10 est en outre configuré pour être commandé soit manuellement directement sur le moniteur principal 10, auquel cas, celui-ci comprend une fonction tactile, soit au moyen de boutons de commande, placés sur le tableau de bord 11 ou proche du volant, soit par l'intermédiaire d'un système de commande 2.

Un tel système de commande 2, de préférence monté sur la console centrale 12 du véhicule 1, est accessible par le conducteur du véhicule 1 sans effort quelle que soit la position de son siège. De manière avantageuse, le conducteur n'est ainsi pas contraint d'étendre le bras jusqu'au tableau de bord 11 pour commander le moniteur principal 10.

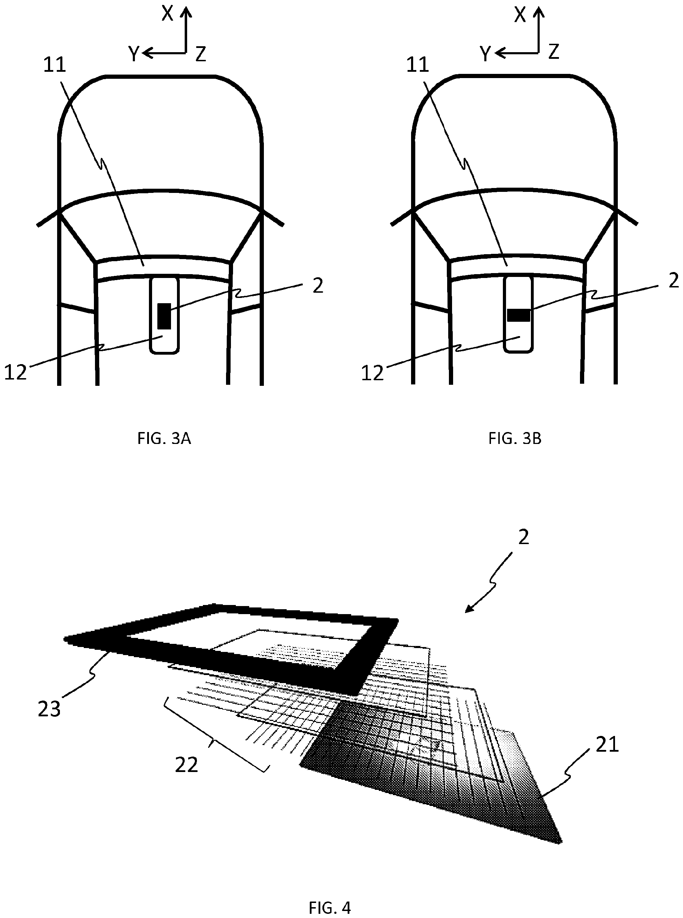

Le système de commande 2, de forme rectangulaire, présente dans cet exemple une diagonale comprise entre 5 et 6 pouces de long et un format 16/10 ou 16/9, lui conférant des dimensions similaires aux dimensions d'un smartphone. En référence aux figures 3A et 3B, un tel système de commande 2 est ainsi aisément intégrable à la console centrale 12 du véhicule 1 et peut être positionné dans le plan sensiblement horizontal de la console centrale 12, selon deux axes perpendiculaires par exemple en fonction de l'encombrement de la console centrale 12. En effet, le système de commande 2 peut être positionné au format dit « portrait » (figure 3A), dans lequel le système de commande 2 est monté longitudinalement, c'est à dire dans la longueur de la console centrale 12, soit au format dit « paysage » (figure 3B), dans lequel le système de commande 2 est monté transversalement sur la console centrale 12, c'est-à-dire dans la largeur de la console centrale 12.

En référence à la figure 4, le système de commande 2, selon un exemple de réalisation de l'invention, comprend un écran d'affichage 21 sur lequel est monté une dalle tactile 22, également désignée couche supérieure, le tout étant recouvert d'un film de protection 23.

Dans cet exemple, l'écran d'affichage 21 présente un état actif E_{A}, dans lequel l'écran d'affichage 21 est allumé, et un état inactif E_{I}, dans lequel l'écran d'affichage 21 est éteint ou affiche un fond d'écran monochrome de manière à limiter les risques de distraction du conducteur, lorsque le véhicule 1 est en mode de conduite piloté P. Un tel état actif E_{A}/inactif E_{I} est configuré pour être activé et/ou désactivé en fonction du mode de conduite piloté P ou autonome Q du véhicule 1, comme cela sera décrit dans la suite de ce document.

Lorsque l'écran d'affichage 21 est dans son état actif E_{A}, celui-ci est configuré pour afficher, lorsque cela est nécessaire, un clavier virtuel, de manière à permettre au conducteur la saisie d'un texte. Différents modes d'affichage d'un tel clavier virtuel seront décrits plus en détails par la suite, suivant l'orientation du système de commande 2.

La dalle tactile 22 est similaire à une dalle tactile utilisée dans un écran classique de type smartphone ou tablette. Le fonctionnement d'une telle dalle tactile 22 est connu en soi et ne sera pas décrit plus en détails dans ce document.

Selon une forme de réalisation préférée de l'invention, la dalle tactile 22 présente une configuration de base Co et une configuration avancée C₁, activée en fonction du mode de conduite P, Q du véhicule 1.

En effet, la configuration de base Co est activée de préférence lorsque le véhicule 1 se trouve dans son mode de conduite piloté P, au cours duquel le conducteur ne peut effectuer que des gestes simples, exécutables sans que celui-ci n'ait besoin de regarder le système de commande 2. En effet, une telle configuration de base Co est une configuration dans laquelle la dalle tactile 22 ne permet qu'un nombre limité de mouvements simples, par exemple un geste simple de glissement d'un doigt vers la droite, vers la gauche, vers le haut ou vers le bas, de tels mouvements étant compatibles avec le mode de conduite piloté P.

Une telle configuration de base Co est configurée pour être activée lorsque le moniteur principal 10 est dans son mode d'affichage simplifié Ao, dans lequel les différentes fonctionnalités sont affichées sous forme d'icônes. La dalle tactile 22 permet alors grâce aux gestes simples de glisser d'une icône à une autre, afin d'accéder à la fonctionnalité souhaitée. Un halo lumineux peut entourer l'icône active, permettant aisément au conducteur de repérer l'icône sélectionnée.

La configuration avancée C₁ est activée de préférence lorsque le véhicule 1 se trouve dans son mode de conduite autonome Q, au cours duquel le conducteur est libre de ses mouvements. En effet, une telle configuration avancée C₁ est une configuration dans laquelle la dalle tactile 22 permet le contrôle du déplacement d'un pointeur affiché sur le moniteur principal 10. La dalle tactile 22, alors similaire à une souris d'ordinateur personnel, permet le déplacement du pointeur dans toute direction sur le moniteur principal 10.

Une telle configuration avancée C₁ est configurée pour être activée lorsque le moniteur principal 10 est dans son mode d'affichage complet A₁, dans lequel l'affichage du moniteur principal 10 est semblable à l'affichage d'un ordinateur personnel, par exemple sous un environnement informatique Windows^{®}. La dalle tactile 22 permet alors de sélectionner directement une application ou un document par exemple.

De manière alternative, la dalle tactile 22 peut également présenter une configuration intermédiaire, dans laquelle ladite dalle tactile 22 permet le nombre limité de mouvements simples de la configuration de base Co et comprend également une fonction de reconnaissance d'écriture. En effet, lorsque le véhicule 1 est dans son mode de conduite piloté P, mais que le conducteur souhaite par exemple entrer une adresse dans le système de navigation, la dalle tactile 22 peut permettre au conducteur de tracer successivement avec le doigt les lettres de la destination souhaitée. De telles lettres s'affichent alors sur le moniteur principal 10, afin que le conducteur puisse contrôler la reconnaissance des lettres.

Le système de commande 2 comprend alors un premier mode de fonctionnement, dans lequel le moniteur principal 10 est dans son mode d'affichage simplifié Ao et la dalle tactile 22 dans sa configuration de base Co (ou dans sa configuration intermédiaire lorsque l'entrée d'un texte est nécessaire), et un deuxième mode de fonctionnement, dans lequel le moniteur principal 10 est dans son mode d'affichage complet A₁ et la dalle tactile 22 dans sa configuration avancée C₁.

Le système de commande 2 comprend en outre un module de commande (non représenté) configuré pour placer le système de commande 2 dans le premier mode de fonctionnement et le moniteur principal 10 dans le mode d'affichage simplifié Ao lorsque le véhicule 1 est dans le mode de conduite piloté P ou pour placer le système de commande 2 dans le deuxième mode de fonctionnement et le moniteur principal 10 dans le mode d'affichage complet A₁ lorsque le véhicule 1 est dans le mode de conduite autonome Q. Le module de commande, par exemple le calculateur principal du véhicule 1, est ainsi configuré pour commander simultanément l'écran d'affichage 21, la dalle tactile 22 et le moniteur principal 10.

En résumé, le module de commande est configuré pour détecter le mode de conduite P, Q du véhicule 1 et commander :
- lorsque le véhicule 1 est dans son mode de conduite piloté P, le premier mode de fonctionnement du système de commande 2, c'est-à-dire pour commander :
   ∘ le mode d'affichage simplifié Ao du moniteur principal 10,
   ∘ l'état inactif E_{I} de l'écran d'affichage 21, et
   ∘ la configuration de base Co de la dalle tactile 22, et
- lorsque le véhicule 1 est dans son mode de conduite autonome Q, le deuxième mode de fonctionnement du système de commande 2, c'est-à-dire pour commander :
   ∘ le mode d'affichage complet A₁ du moniteur principal 10,
   ∘ l'état actif E_{A} de l'écran d'affichage 21, et
   ∘ la configuration avancée C₁ de la dalle tactile 22.

Lorsque le système de commande 2 se trouve dans le deuxième mode de fonctionnement, l'écran d'affichage 21 est en outre configuré pour afficher un clavier virtuel, permettant au conducteur de saisir du texte comme décrit précédemment. Lorsque le système de commande 2 se trouve positionné longitudinalement, au format portrait, alors un tel clavier virtuel est configuré pour être affiché sur une moitié de l'écran d'affichage 21, de manière à permettre en parallèle le déplacement du pointeur sur le moniteur principal 10.

Lorsque le système de commande 2 se trouve positionné transversalement, au format paysage, alors un tel clavier virtuel est configuré pour être affiché sur la totalité de l'écran d'affichage 21, et pour pouvoir être placé en arrière-plan, lorsque l'utilisateur souhaite déplacer le pointeur sur le moniteur principal 10. Les lettres sur le clavier virtuel peuvent alors être désactivées ou grisées, voire être mises en transparences, de manière à ne pas gêner l'utilisateur.

De manière optionnelle, le système de commande 2 peut présenter sur l'écran d'affichage 21, un message de bienvenue lorsque le conducteur pénètre dans le véhicule 1 ou bien un message d' « au-revoir » lorsque ce dernier quitte le véhicule 1. Le système de commande 2 peut également afficher un message d'identification de reconnaissance du conducteur.

De manière alternative, le véhicule 1 pourrait également comprendre un moniteur secondaire sur le tableau de bord 11 permettant par exemple l'affichage des données relatives au véhicule 1, comme la consommation en carburant et la vitesse par exemple. Le système de commande 2 peut dans un tel cas être configuré pour commander à la fois le moniteur principal 10 et le moniteur secondaire. Dans le deuxième mode de fonctionnement, le pavé tactile 22 du système de commande 2 serait alors configuré pour permettre le déplacement du pointeur entre le moniteur principal 10 et le moniteur secondaire.

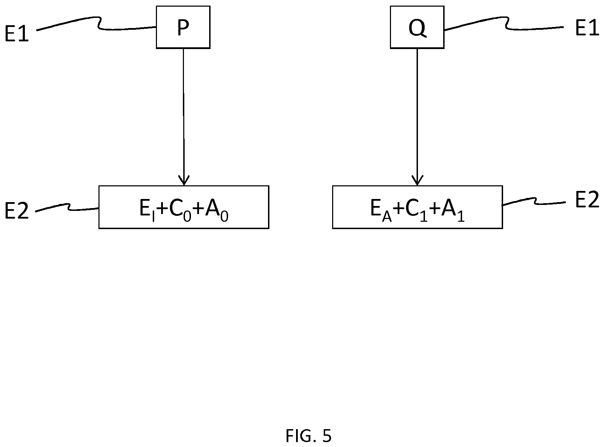

Il va dorénavant être présenté, en référence à la figure 5, un procédé de commande d'un moniteur principal 10 par un système de commande 2 selon un mode de réalisation préféré de l'invention.

Dans cet exemple, le module de commande détecte, dans une étape E1, le mode de conduite piloté P ou le mode de conduite autonome Q du véhicule 1, permettant dans une étape E2 l'activation du premier mode de fonctionnement ou du deuxième mode de fonctionnement du véhicule 1.

Aussi lorsque le mode de conduite piloté P du véhicule 1 est détecté, le module de commande active dans cette étape E2 :
- l'état inactif E_{I} de l'écran d'affichage 21,
- la configuration de base Co de la dalle tactile 22, et
- l'affichage simplifié Ao du moniteur principal 10.

Lorsque le mode de conduite autonome Q du véhicule 1 est détecté, le module de commande active dans cette même étape E2 :
- l'état actif E_{A} de l'écran d'affichage 21,
- la configuration avancée C₁ de la dalle tactile 22, et
- affichage complet A₁ du moniteur principal 10.

Ce document décrit l'utilisation du système de commande 2 par le conducteur du véhicule 1, cependant il va de soi que le système de commande 2 pourrait tout aussi bien être commandé par n'importe quel occupant du véhicule 1, par exemple un passager.

Un tel système de commande permet avantageusement à la fois d'assurer un affichage et une utilisation simple lorsque le conducteur pilote le véhicule et des fonctionnalités similaires à un ordinateur personnel lorsque le conducteur ne pilote pas le véhicule.

## Revendications

1. Système de commande (2) pour la commande d'un moniteur principal (10) de véhicule (1), notamment de véhicule (1) automobile, ledit véhicule (1) comprenant une console centrale (12) et présentant un mode de conduite piloté (P) et un mode de conduite autonome (Q), ledit système de commande (2), configuré pour être monté sur ladite console centrale (12), comprenant :
- un écran d'affichage (21), présentant un état actif (E_{A}) et un état inactif (E_{I}),
- une dalle tactile (22), présentant une configuration de base (C₀), dans laquelle ladite dalle tactile (22) ne permet qu'un nombre limité de mouvements simples, et une configuration avancée (C₁), dans laquelle la dalle tactile (22) est configurée pour permettre le contrôle du déplacement d'un pointeur sur le moniteur principal (10),
ledit système de commande (2) présentant un premier mode de fonctionnement, dans lequel ledit écran d'affichage (21) est dans ledit état inactif (E_{I}) et la dalle tactile (22) est dans sa configuration de base (C₀), et un deuxième mode de fonctionnement, dans lequel ledit écran d'affichage (21) est dans ledit état actif (E_{A}) et la dalle tactile (22) est dans sa configuration avancée (C₁),
ledit système de commande (2) comprenant en outre un module de commande configuré pour placer le système de commande (2) dans ledit premier mode de fonctionnement lorsque le véhicule (1) se trouve dans le mode de conduite piloté (P) ou dans ledit deuxième mode de fonctionnement lorsque le véhicule (1) se trouve dans le mode de conduite autonome (Q).

2. Système de commande (2) selon la revendication précédente, dans lequel le moniteur principal (10) présentant un mode d'affichage simplifié (A₀) et un mode d'affichage complet (A₁), ledit module de commande est en outre configuré pour placer le moniteur principal (10) dans ledit mode d'affichage simplifié (A₀) lorsque le véhicule (1) est en mode de conduite piloté (P) ou dans ledit mode d'affichage complet (A₁) lorsque le véhicule (1) est en mode de conduite autonome (Q).

3. Système de commande (2) selon l'une des revendications précédentes, dans lequel les mouvements simples de la configuration de base (C₀) correspondent à un mouvement de glissement vers la gauche, un mouvement de glissement vers la droite, un mouvement de glissement vers le bas ou un mouvement de glissement vers le haut.

4. Système de commande (2) selon l'une des revendications précédentes, dans lequel la dalle tactile (22) présente également une configuration intermédiaire dans laquelle ladite dalle tactile (22) permet un nombre limité de mouvements simples combinés à une fonction de reconnaissance d'écriture.

5. Système de commande (2) selon l'une des revendications précédentes, dans lequel l'état actif (E_{A}) de l'écran d'affichage (21) correspond audit écran d'affichage (21) allumé et l'état inactif (E_{I}) de l'écran d'affichage (21) correspond audit écran d'affichage (21) éteint ou présentant un fond d'écran monochrome.

6. Système de commande (2) selon l'une des revendications précédentes, dans lequel l'écran d'affichage (21) est configuré pour afficher un clavier virtuel tactile.

7. Système de commande (2) selon l'une des revendications précédentes, dans lequel, le véhicule (1) comprenant un moniteur secondaire, ledit système de commande (2) est en outre configuré pour commander ledit moniteur secondaire.

8. Système de commande (2) selon l'une des revendications précédentes, configuré pour commander un moniteur principal (10) de véhicule (1) comprenant un écran tactile et/ou un écran non tactile.

9. Procédé de commande d'un moniteur principal (10) de véhicule (1) par un système de commande (2) comprenant un écran d'affichage (21), une dalle tactile (22) et un module de commande (2), ledit procédé comprenant :
- une étape (E1) de détection par ledit module de commande, d'un mode de conduite piloté (P) ou d'un mode de conduite autonome (Q) du véhicule (1), et
- une étape (E2) d'activation, par le module de commande, d'un premier mode de fonctionnement dudit système de commande (2), dans lequel ledit écran d'affichage (21) est dans un état inactif (E_{I}) et ladite dalle tactile (22) est dans une configuration de base (C₀), dans laquelle ladite dalle tactile (22) ne permet qu'un nombre limité de mouvements simples, lorsque le véhicule (1) se trouve dans ledit mode de conduite piloté (P) ou d'activation d'un deuxième mode de fonctionnement, dans lequel l'écran d'affichage (21) est dans un état actif (E_{A}) et la dalle tactile (22) est dans une configuration avancée (C₁), dans laquelle la dalle tactile (22) est configurée pour permettre le contrôle du déplacement d'un pointeur sur le moniteur principal (10), lorsque le véhicule (1) se trouve dans ledit mode de conduite autonome (Q).

10. Véhicule (1) automobile comprenant un moniteur principal (10) et un système de commande (2) d'un tel moniteur principal (10) selon l'une des revendications 1 à 8.

## Patentansprüche

1. Steuersystem (2) zur Steuerung eines Hauptmonitors (10) eines Fahrzeugs (1), insbesondere eines Kraftfahrzeugs (1), wobei das Fahrzeug (1) eine Mittelkonsole (12) umfasst und einen gesteuerten Fahrmodus (P) und einen autonomen Fahrmodus (Q) aufweist, wobei das Steuersystem (2), das so konfiguriert ist, dass es an der Mittelkonsole (12) angebracht werden kann, umfasst:
- einen Anzeigebildschirm (21), der einen aktiven Zustand (EA) und einen inaktiven Zustand (EI) aufweist,
- einen Touchscreen (22), der eine Grundkonfiguration (CO) aufweist, in der der Touchscreen (22) nur eine begrenzte Anzahl einfacher Bewegungen zulässt, und eine erweiterte Konfiguration (C1), in der der Touchscreen (22) so konfiguriert ist, dass er die Steuerung der Bewegung eines Zeigers auf dem Hauptmonitor (10) ermöglicht,
wobei das Steuersystem (2) einen ersten Betriebsmodus aufweist, in dem sich der Anzeigebildschirm (21) in dem inaktiven Zustand (EI) befindet und sich der Touchscreen (22) in seiner Grundkonfiguration (CO) befindet, und einen zweiten Betriebsmodus, in dem sich der Anzeigebildschirm (21) in dem aktiven Zustand (EA) befindet und sich der Touchscreen (22) in seiner erweiterten Konfiguration (C1) befindet,
wobei das Steuersystem (2) ferner ein Steuermodul umfasst, das so konfiguriert ist, dass es das Steuersystem (2) in den ersten Betriebsmodus versetzt, wenn sich das Fahrzeug (1) im pilotierten Fahrmodus (P) befindet, oder in den zweiten Betriebsmodus, wenn sich das Fahrzeug (1) im autonomen Fahrmodus (Q) befindet.

2. Steuerungssystem (2) nach dem vorhergehenden Anspruch, wobei der Hauptmonitor (10) einen vereinfachten Anzeigemodus (A0) und einen Vollanzeigemodus (A1) aufweist, wobei das Steuermodul ferner so konfiguriert ist, dass es den Hauptmonitor (10) in den vereinfachten Anzeigemodus (A0) versetzt, wenn sich das Fahrzeug (1) im pilotierten Fahrmodus (P) befindet, oder in den Vollanzeigemodus (A1) versetzt, wenn sich das Fahrzeug (1) im autonomen Fahrmodus (Q) befindet.

3. Steuersystem (2) nach einem der vorhergehenden Ansprüche, wobei die einfachen Bewegungen der Grundkonfiguration (CO) einer Gleitbewegung nach links, einer Gleitbewegung nach rechts, einer Gleitbewegung nach unten oder einer Gleitbewegung nach oben entsprechen.

4. Steuersystem (2) nach einem der vorhergehenden Ansprüche, wobei der Touchscreen (22) auch eine Zwischenkonfiguration aufweist, bei der der Touchscreen (22) eine begrenzte Anzahl einfacher Bewegungen in Kombination mit einer Handschriftenerkennungsfunktion ermöglicht.

5. Steuersystem (2) nach einem der vorhergehenden Ansprüche, wobei der aktive Zustand (EA) des Anzeigebildschirms (21) dem eingeschalteten Anzeigebildschirm (21) entspricht und der inaktive Zustand (EI) des Anzeigebildschirms (21) dem ausgeschalteten Anzeigebildschirm (21) entspricht oder einen einfarbigen Bildschirmhintergrund aufweist.

6. Steuersystem (2) nach einem der vorhergehenden Ansprüche, wobei der Anzeigebildschirm (21) so konfiguriert ist, dass er eine berührungsempfindliche virtuelle Tastatur anzeigt.

7. Steuersystem (2) nach einem der vorhergehenden Ansprüche, wobei, da das Fahrzeug (1) einen Zweitmonitor umfasst, das Steuersystem (2) ferner so konfiguriert ist, dass es den Zweitmonitor steuert.

8. Steuersystem (2) nach einem der vorhergehenden Ansprüche, das konfiguriert ist, um einen Hauptmonitor (10) des Fahrzeugs (1) zu steuern, der einen Touchscreen und/oder einen Nicht-Touchscreen umfasst.

9. Verfahren zur Steuerung eines Hauptmonitors (10) eines Fahrzeugs (1) durch ein Steuersystem (2), das einen Anzeigebildschirm (21), einen Touchscreen (22) und ein Steuermodul (2) umfasst, wobei das Verfahren umfasst:
- einen Schritt (E1) des Erfassens eines gesteuerten Fahrmodus (P) oder eines autonomen Fahrmodus (Q) des Fahrzeugs (1) durch das Steuermodul, und
- einen Schritt (E2) des Aktivierens eines ersten Betriebsmodus des Steuersystems (2) durch das Steuermodul, wobei sich der Anzeigebildschirm (21) in einem inaktiven Zustand (EI) befindet und sich der Touchscreen (22) in einer Grundkonfiguration (CO) befindet, in der der Touchscreen (22) nur eine begrenzte Anzahl einfacher Bewegungen zulässt, wenn sich das Fahrzeug (1) in dem genannten pilotierten Fahrmodus (P) oder der Aktivierung eines zweiten Betriebsmodus befindet, in dem sich der Anzeigebildschirm (21) in einem aktiven Zustand (EA) befindet und sich der Touchscreen (22) in einer erweiterten Konfiguration (C1) befindet, in der der Touchscreen (22) so konfiguriert ist, dass er die Steuerung der Bewegung eines Zeigers auf dem Hauptmonitor (10) ermöglicht, wenn sich das Fahrzeug (1) in dem genannten autonomen Fahrmodus (Q) befindet.

10. Kraftfahrzeug (1) mit einem Hauptmonitor (10) und einem Steuersystem (2) für einen solchen Hauptmonitor (10) nach einem der Ansprüche 1 bis 8.

## Claims

1. A control system (2) for controlling a main monitor (10) of a vehicle (1), in particular a motor vehicle (1), said vehicle (1) comprising a central console (12) and having a piloted driving mode (P) and an autonomous driving mode (Q), said control system (2), configured to be mounted on said central console (12), comprising :
- a display screen (21), having an active state (EA) and an inactive state (EI)
- a touch panel (22), having a basic configuration (C0), in which said touch panel (22) allows only a limited number of simple movements, and an advanced configuration (C1), in which the touch panel (22) is configured to allow control of the movement of a pointer on the main monitor (10)
said control system (2) having a first mode of operation, in which said display screen (21) is in said inactive state (EI) and the touch panel (22) is in its basic configuration (C0), and a second mode of operation, in which said display screen (21) is in said active state (EA) and the touch panel (22) is in its advanced configuration (C1)
said control system (2) further comprising a control module configured to place the control system (2) in said first operating mode when the vehicle (1) is in the piloted driving mode (P) or in said second operating mode when the vehicle (1) is in the autonomous driving mode (Q).

2. The control system (2) according to the preceding claim, wherein the main monitor (10) having a simplified display mode (A0) and a full display mode (A1), said control module is further configured to place the main monitor (10) in said simplified display mode (A0) when the vehicle (1) is in the piloted driving mode (P) or in said full display mode (A1) when the vehicle (1) is in the autonomous driving mode (Q).

3. The control system (2) according to any of the preceding claims, wherein the simple movements of the basic configuration (C0) correspond to a left sliding movement, a right sliding movement, a down sliding movement or an up sliding movement.

4. The control system (2) according to any of the preceding claims, wherein the touch panel (22) also has an intermediate configuration in which said touch panel (22) allows a limited number of simple movements combined with a handwriting recognition function.

5. The control system (2) according to any of the preceding claims, wherein the active state (EA) of the display screen (21) corresponds to said display screen (21) turned on and the inactive state (EI) of the display screen (21) corresponds to said display screen (21) turned off or having a monochrome background.

6. The control system (2) according to any of the preceding claims, wherein the display screen (21) is configured to display a virtual touch keyboard.

7. The control system (2) according to any of the preceding claims, wherein, the vehicle (1) comprising a secondary monitor, said control system (2) is further configured to control said secondary monitor.

8. The control system (2) according to any of the preceding claims, configured to control a main monitor (10) of the vehicle (1) comprising a touch screen and/or a non-touch screen.

9. Method of controlling a main monitor (10) of a vehicle (1) by a control system (2) comprising a display screen (21), a touch panel (22) and a control module (2), said method comprising:
- a step (E1) of detection by said control module of a piloted driving mode (P) or an autonomous driving mode (Q) of the vehicle (1), and
- a step (E2) of activating, by the control module, a first operating mode of said control system (2), in which said display screen (21) is in an inactive state (EI) and said touch panel (22) is in a basic configuration (C0), in which said touch panel (22) only allows a limited number of simple movements, when the vehicle (1) is in said piloted driving mode (P) or activation of a second operating mode, in which the display screen (21) is in an active state (EA) and the touch panel (22) is in an advanced configuration (C1), in which the touch panel (22) is configured to allow control of the movement of a pointer on the main monitor (10), when the vehicle (1) is in said autonomous driving mode (Q)

10. A motor vehicle (1) comprising a main monitor (10) and a control system (2) for such a main monitor (10) according to any of claims 1 to 8.
